# FASCICULE DE BREVET EUROPEEN

(11) **EP 2 077 216 B1**
(45) Date de publication et mention de la délivrance du brevet: **18.08.2010**
(21) Numéro de dépôt: 08173095.4
(22) Date de dépôt: 30.12.2008
(51) Int. Cl.: B61D 17/12, B61D 27/00

(54) **Véhicule ferroviaire pourvu d'un groupe de climatisation fixé au pavillon du véhicule**
Schienenfahrzeug mit einer Klimatisierungseinrichtung die am Fahrzeugdach befestigt ist
Railway vehicle with an air conditioning device fixed to the vehicle roof panel

(30) Priorité: 03.01.2008 FR 0850028
(43) Date de publication de la demande: 08.07.2009
(73) Titulaire: ALSTOM Transport SA, 92300 Levallois-Perret (FR)
(72) Inventeur: Roudet, Christophe, 17138 Saint Xandre (FR); Harguindeguy, Patrick, 17690 Angoulins sur Mer (FR)
(74) Mandataire: Blot, Philippe Robert Emile

(56) Documents cités:
- EP-A- 1 447 296
- DE-A1- 3 040 815
- FR-A- 2 021 038
- FR-A- 2 223 225
- US-A- 2 188 496

## Description

La présente invention concerne un véhicule ferroviaire du type comprenant un pavillon dans lequel est formée une ouverture débouchant dans l'habitacle du véhicule, un groupe de climatisation étant monté de façon mobile au-dessus dudit pavillon et comprenant une sortie d'air disposée en regard de l'ouverture du pavillon, ledit véhicule comprenant un dispositif de jonction entre la sortie d'air et l'ouverture, ledit dispositif de jonction étant agencé pour permettre le passage de l'air, de façon étanche, de la sortie d'air à l'habitacle par l'ouverture, ledit dispositif de jonction comprenant un corps flexible agencé pour assurer le passage de l'air lorsque le pavillon et la sortie d'air du groupe de climatisation sont mobiles l'un par rapport à l'autre.

Dans les véhicules ferroviaires, la sortie d'air du groupe de climatisation est généralement reliée à l'ouverture d'alimentation en air de l'habitacle du véhicule par un système de joints, par exemple en mousse ou à bulles, afin d'assurer l'étanchéité entre la sortie et l'ouverture.

Le document US-A-2 188 496 décrit un véhicule ferroviaire conforme au préambule de la revendication 1.
Un tel système est satisfaisant pour assurer l'étanchéité entre deux pièces fixes, c'est-à-dire lorsque le groupe de climatisation est immobile par rapport à l'ouverture d'alimentation en air de l'habitacle, mais il n'est pas adapté lorsque l'une des pièces est mobile par rapport à l'autre, car le joint s'userait prématurément ou se déchirerait en cas de mouvement trop important d'une pièce par rapport à l'autre. Un tel système n'est en outre pas satisfaisant pour garantir une résistance aux sollicitations dues aux ondes de pression, lors du passage à grande vitesse d'un véhicule ferroviaire dans un tunnel par exemple.

Afin d'isoler le groupe de climatisation des vibrations dues au déplacement du véhicule ferroviaire, il est possible de fixer celui-ci au pavillon du véhicule ferroviaire de façon à être monté en suspension sur des plots en caoutchouc souples, ce qui rend le groupe de climatisation mobile par rapport au pavillon du véhicule ferroviaire. Les plots permettent également de ne pas transmettre les vibrations du groupe de climatisation vers le reste du véhicule ferroviaire. En effet, le groupe de climatisation produit des vibrations dues à ses éléments tournants motorisés, tels que son compresseur et son ventilateur. De plus, le groupe de climatisation est soumis aux ondes de pression.

Par conséquent, un système de joint tel que décrit ci-dessus n'est pas satisfaisant pour garantir l'étanchéité entre la sortie d'air d'un tel groupe de climatisation, monté mobile et soumis à des ondes de pression, et l'ouverture d'alimentation en air de l'habitacle.

L'invention vise à pallier ces inconvénients en proposant un véhicule ferroviaire du type précité dans lequel le dispositif de jonction entre la sortie d'air du groupe de climatisation et l'ouverture dans le pavillon garantit l'étanchéité et la résistance aux sollicitations dues aux ondes de pression en cas de mouvement du groupe de climatisation par rapport au pavillon.

A cet effet, l'invention concerne un véhicule ferroviaire du type précité, dans lequel ledit dispositif de jonction comprend un premier cadre métallique fixé de façon étanche au pavillon et encadrant l'ouverture du pavillon et un deuxième cadre métallique fixé de façon étanche au groupe de climatisation et encadrant la sortie d'air, le corps flexible étant fixé de façon étanche aux dits cadres métalliques.

Selon d'autres caractéristiques du véhicule ferroviaire :
- le corps flexible comprend un soufflet souple entourant la sortie d'air et l'ouverture et fixé au groupe de climatisation et au pavillon de façon étanche ;
- le soufflet souple est réalisé en tissu enduit de silicone ;
- le deuxième cadre métallique comprend une charnière d'articulation au groupe de climatisation ;
- le véhicule comprend une lèvre d'écrasement ou un joint s'étendant entre le deuxième cadre et le groupe de climatisation de sorte à assurer l'étanchéité entre ledit deuxième cadre et ledit groupe de climatisation ;
- le corps souple comprend en outre un soufflet interne s'étendant à l'intérieur du soufflet souple et fixé de façon étanche au premier et au deuxième cadre de sorte à définir trois passages d'air entre la sortie d'air et l'ouverture du pavillon ;
- le soufflet interne est réalisé en tissu enduit de silicone ;
- le groupe de climatisation est fixé au pavillon par au moins un plot en matériau souple.

D'autres aspects et avantages de l'invention apparaîtront au cours de la description qui suit, donnée à titre d'exemple et faite en référence aux dessins annexés, dans lesquels :
- la Fig. 1 est une représentation schématique en coupe d'un véhicule ferroviaire selon l'invention,
- la Fig. 2 est une représentation schématique en perspective d'un dispositif de jonction du véhicule ferroviaire, ledit dispositif étant fixé au pavillon dudit véhicule.

Dans la description, les termes « dessus », « dessous », « inférieur », « supérieur » sont définis par rapport aux directions usuelles d'un véhicule ferroviaire disposé sur des rails.

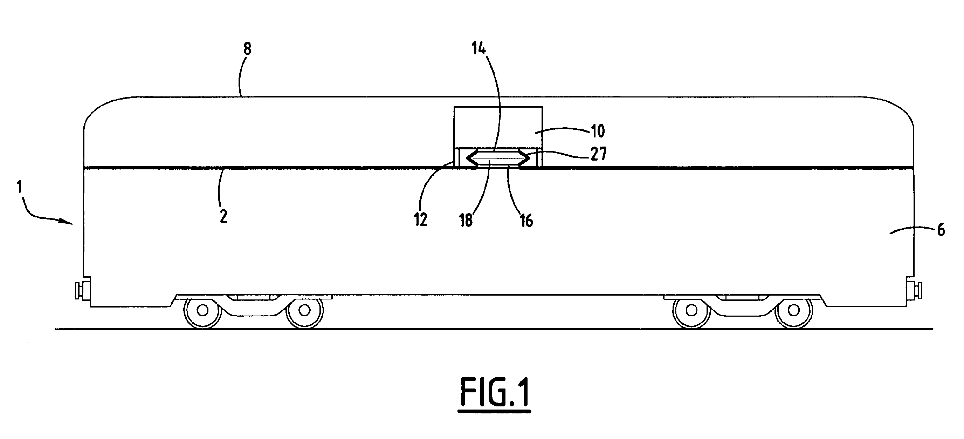

En référence à la Figure 1, on décrit un véhicule ferroviaire 1 comprenant un pavillon 2 surmontant l'habitacle 6 du véhicule ferroviaire et une toiture 8 surmontant le pavillon 2.

Un groupe de climatisation 10 est fixé au pavillon 2 de sorte à être monté en suspension sur ledit pavillon 2 afin d'isoler le groupe de climatisation 10 des vibrations dues aux déplacements du véhicule ferroviaire 1. En effet, de telles vibrations pourraient endommager le groupe de climatisation 10 ou provoquer son usure prématurée si le groupe de climatisation 10 était fixé rigidement au pavillon 2. L'isolation du groupe de climatisation 10 permet également d'éviter la transmission des vibrations générées par le groupe de climatisation au reste du véhicule ferroviaire. Afin d'isoler le groupe de climatisation 10, celui-ci est monté sur des plots 12 en matériau souple, par exemple du caoutchouc. Les plots 12 sont fixés au pavillon 2 et absorbent les vibrations dues aux déplacements du véhicule ferroviaire 1. Selon un mode de réalisation, le groupe de climatisation 10 est monté sur huit plots 12. Cette fixation du groupe de climatisation 10 au pavillon 2 a pour effet de rendre le groupe de climatisation 10 mobile par rapport au pavillon 2 lors des déplacements du véhicule ferroviaire 1.

Le groupe de climatisation 10 comprend une sortie d'air 14 prévue sur la face inférieure du groupe de climatisation 10 disposée en regard du plafond 4. Le groupe de climatisation 10 est monté de telle sorte que la sortie d'air 14 se trouve en regard d'une ouverture 16 traversant le pavillon 2. Cette ouverture 16 permet le passage de l'air sortant de la sortie d'air 14 vers l'habitacle 6 du véhicule ferroviaire afin d'assurer la climatisation de celui-ci.

La sortie d'air 14 est disposée à une certaine distance au-dessus de l'ouverture 16 du fait de la présence des plots de montage 12. Un dispositif de jonction 18 est donc prévu entre la sortie d'air 14 et l'ouverture 16, afin permettre le passage de l'air, de façon étanche, de la sortie d'air 14 à l'habitacle par l'ouverture 16.

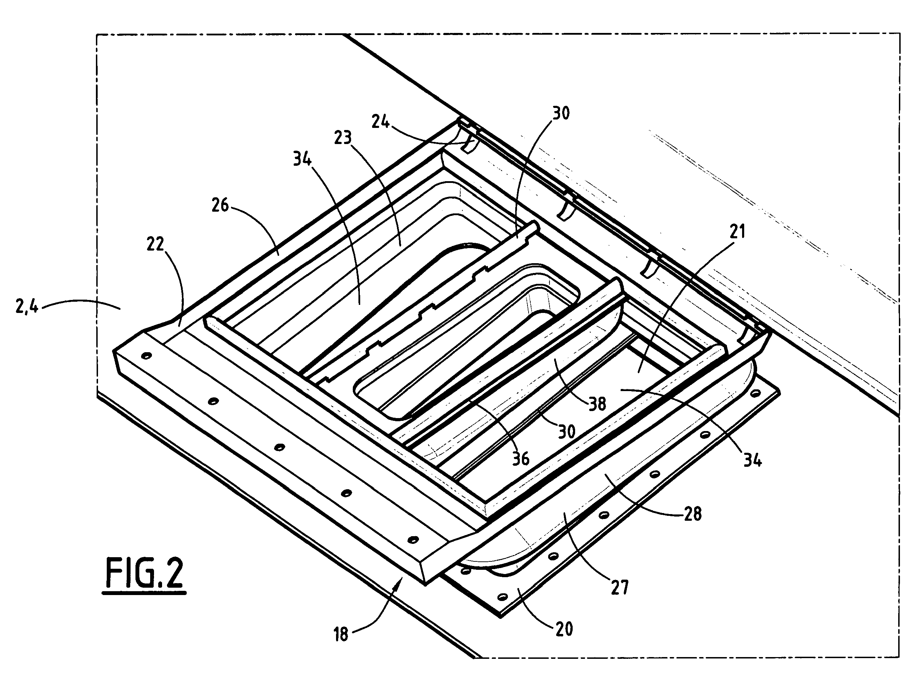

Ce dispositif de jonction 18 est à présent décrit plus en détail en référence à la Figure 2.

Le dispositif de jonction comprend un premier cadre 20 métallique fixé de façon étanche au pavillon 2 et encadrant l'ouverture 16. Ce cadre 20 est par exemple fixé par vissage au pavillon 2. Le premier cadre comprend une ouverture centrale 21 disposée en regard de l'ouverture 16.

Le dispositif de jonction comprend en outre un deuxième cadre métallique 22 fixé de façon étanche à la face inférieure du groupe de climatisation 10 et encadrant la sortie d'air 14. Le deuxième cadre comprend une ouverture centrale 23 disposée en regard de la sortie d'air 14 et sensiblement de mêmes dimensions que l'ouverture centrale 21 du premier cadre 20. Le deuxième cadre 22 comprend une charnière 24 d'articulation au groupe de climatisation 10, dans laquelle s'emboîte un bord (non représenté) du groupe de climatisation. Une telle charnière 24 facilite le montage du dispositif de jonction 18 sur le groupe de climatisation 10. En effet, l'opérateur, qui monte le dispositif, emboîte la charnière 24 sur le bord du groupe de climatisation 10 et en effectuant une simple rotation du cadre 22, celui-ci est guidé automatiquement sur l'autre bord du groupe. Une telle réalisation permet un montage « en aveugle » du dispositif de jonction 18 en évitant un positionnement compliqué de chaque bord du dispositif de jonction 18 par rapport à chaque bord du groupe de climatisation.

Afin d'assurer l'étanchéité entre le deuxième cadre 22 et le groupe de climatisation 10, une lèvre d'écrasement ou un joint (non représenté) s'étend entre le deuxième cadre 22 et le groupe de climatisation 10. Cette lèvre, ou joint, est par exemple disposée dans une rainure 26 entourant l'ouverture centrale 23. Une telle lèvre, ou joint, peut également être prévue entre le premier cadre 20 et le pavillon 2.

Le premier et le deuxième cadres métalliques 20, 22 sont reliés l'un à l'autre par un corps flexible 27, du type soufflet 28. Le soufflet 28 est souple, entoure les ouvertures centrales 21, 23 et assure le passage de l'air entre la sortie d'air 14 et l'ouverture 16 de façon étanche. Le soufflet souple 28 est par exemple réalisé en tissu enduit de silicone. Ce soufflet 28 est par exemple fixé de façon étanche par vissage d'une part au premier cadre 20 et d'autre part au deuxième cadre 22. Un tel soufflet présente l'avantage de se déformer lors des mouvements du groupe de climatisation 10 par rapport au pavillon 2. Ainsi, à la différence d'une liaison rigide entre le groupe de climatisation et le pavillon, le soufflet 28 permet de maintenir un passage étanche de l'air entre la sortie d'air 14 et l'habitacle 6 du véhicule ferroviaire 1 sans usure prématurée du dispositif de jonction 18 et sans risque de déchirement lors de mouvements brusques entre le groupe de climatisation 10 et le pavillon 2. Le dispositif de jonction 18 présente donc une durée de vie importante.

De plus, un tel soufflet 28 permet de rattraper un mauvais alignement entre le groupe de climatisation 10 et l'ouverture 16 du pavillon 2 car il peut être déformé afin d'assurer un montage correct. De plus, un tel soufflet résiste aux sollicitations dues aux ondes de pression, qui surviennent par exemple lorsque le véhicule ferroviaire circule à grande vitesse dans un tunnel.

Selon le mode de réalisation représenté sur la Figure 2, le dispositif de jonction 18 comprend en outre des canaux séparés pour faire passer l'air chaud et l'air froid. A cet effet, le premier et le deuxième cadres 20, 22 comprennent chacun deux branches internes 30 s'étendant d'un bord des cadres 20 et 22 à l'autre de sorte à définir trois ouvertures, une ouverture centrale 32 et deux ouvertures latérales 34, dans chaque ouverture centrale 21, 23. Les branches 30 sont par exemple formées par un cadre interne 36 s'étendant sensiblement au centre des premier et deuxième cadres 20, 22 et fixées à ceux-ci par vissage. Un soufflet interne 38 est fixé auxdites branches 30 de sorte à relier de façon étanche les ouvertures centrales 32. Le soufflet interne 38 s'étend donc à l'intérieur du soufflet souple 28. Le soufflet interne 38 est par exemple réalisé en tissu enduit de silicone.

Les deux ouvertures latérales 34 servent par exemple pour le passage de l'air froid entre la sortie d'air 14 et l'habitacle 6, tandis que l'ouverture centrale 32 sert pour le passage de l'air chaud. Le dispositif de jonction permet donc de séparer les flux d'air entre la sortie d'air du groupe de climatisation et l'ouverture du pavillon.

Le dispositif de jonction 18 décrit ci-dessus permet d'assurer une étanchéité et une résistance aux effets des ondes de pression dans le cas d'un groupe de climatisation mobile par rapport au pavillon. De plus, le dispositif de jonction est peu encombrant et présente une durée de vie importante du fait de la capacité à se déformer des soufflets 28 et 38, ce qui réduit l'usure du dispositif de jonction. En outre, le dispositif de jonction 18 permet un montage simple « en aveugle » et permet de tolérer un alignement imprécis de montage entre la sortie d'air 14 et l'ouverture 16.

## Revendications

1. Véhicule ferroviaire du type comprenant un pavillon (2) dans lequel est formée une ouverture (16) débouchant dans l'habitacle (6) du véhicule, un groupe de climatisation (10) étant monté de façon mobile au-dessus dudit pavillon (2) et comprenant une sortie d'air (14) disposée en regard de l'ouverture (16) du pavillon (2), ledit véhicule comprenant un dispositif de jonction (18) entre la sortie d'air (14) et l'ouverture (16), ledit dispositif de jonction (18) étant agencé pour permettre le passage de l'air, de façon étanche, de la sortie d'air (14) à l'habitacle (6) par l'ouverture (16), ledit dispositif de jonction (18) comprenant un corps flexible (27) agencé pour assurer le passage de l'air lorsque le pavillon (2) et la sortie d'air (14) du groupe de climatisation (10) sont mobiles l'un par rapport à l'autre, **caractérisé en ce que** le dispositif de jonction (18) comprend un premier cadre (20) métallique fixé de façon étanche au pavillon (2) et encadrant l'ouverture (16) du pavillon (2) et un deuxième cadre métallique (22) fixé de façon étanche au groupe de climatisation (10) et encadrant la sortie d'air (14), le corps flexible étant fixé de façon étanche aux dits cadres métalliques (20, 22).

2. Véhicule ferroviaire selon la revendication 1, **caractérisé en ce que** le corps flexible (27) comprend un soufflet souple (28) entourant la sortie d'air (14) et l'ouverture (16) et fixé au groupe de climatisation (10) et au pavillon (2) de façon étanche.

3. Véhicule ferroviaire selon la revendication 2, **caractérisé en ce que** le soufflet souple (28) est réalisé en tissu enduit de silicone.

4. Véhicule ferroviaire selon l'une quelconque des revendications 1 à 3, **caractérisé en ce que** le deuxième cadre métallique (22) comprend une charnière (24) d'articulation au groupe de climatisation.

5. Véhicule ferroviaire selon l'une quelconque des revendications 1 à 4, **caractérisé en qu'**il comprend une lèvre d'écrasement ou un joint s'étendant entre le deuxième cadre (22) et le groupe de climatisation (10) de sorte à assurer l'étanchéité entre ledit deuxième cadre (22) et ledit groupe de climatisation (10).

6. Véhicule ferroviaire selon l'une quelconque des revendications 2 à 5, **caractérisé en ce que** le corps souple comprend en outre un soufflet interne (38) s'étendant à l'intérieur du soufflet souple (28) et fixé de façon étanche au premier et au deuxième cadres (20, 22) de sorte à définir trois passages (32, 34) d'air entre la sortie d'air (14) et l'ouverture (16) du pavillon (2).

7. Véhicule ferroviaire selon la revendication 6, **caractérisé en ce que** le soufflet interne (38) est réalisé en tissu enduit de silicone.

8. Véhicule ferroviaire selon l'une quelconque des revendications 1 à 7, **caractérisé en ce que** le groupe de climatisation (10) est fixé au pavillon (2) par au moins un plot (12) en matériau souple.

## Claims

1. Railway vehicle of the type comprising a roof (2) in which an opening (16) is formed, opening into the passenger compartment (6) of the vehicle, an air conditioning unit (10) being fitted movably above the said roof (2) and comprising an air outlet (14) arranged opposite the opening (16) in the roof (2), the said vehicle comprising a connecting device (18) between the air outlet (14) and the opening (16), the said connecting device (18) being arranged to allow air to pass, in a sealed manner, from the air outlet (14) to the passenger compartment (6) through the opening (16), the said connecting device (18) comprising a flexible body (27) arranged to provide the passing of air when the roof (2) and the air outlet (14) of the air conditioning unit (10) are movable with respect to each other, **characterised in that** the connecting device (18) comprises a first metal frame (20) fastened in a sealed manner to the roof (2) and framing the opening (16) of the roof (2) and a second metal frame (22) fastened in a sealed manner to the air conditioning unit (10) and framing the air outlet (14), the flexible body being fastened in a sealed manner to the said metal frames (20, 22).

2. Railway vehicle according to claim 1, **characterised in that** the flexible body (27) comprises a flexible bellows (28) surrounding the air outlet (14) and the opening (16) and is fastened to the air conditioning unit (10) and to the roof (2) in a sealed manner.

3. Railway vehicle according to claim 2, **characterised in that** the flexible bellows (28) is made of silicone coated textile.

4. Railway vehicle according to any one of claims 1 to 3, **characterised in that** the second metal frame (22) comprises a hinge (24) for articulation with the air conditioning unit.

5. Railway vehicle according to any one of claims 1 to 4, **characterised in that** it comprises a compression lip or a joint running between the second frame (22) and the air conditioning unit (10) so as to provide sealing between the said second frame (22) and the said air conditioning unit (10).

6. Railway vehicle according to any one of claims 2 to 5, **characterised in that** the flexible body also comprises an internal bellows (38) running on the inside of the flexible bellows (28) and fastened in a sealed manner to the first and second frames (20, 22) so as to define three air passages (32, 34) between the air outlet (14) and the opening (16) in the roof (2).

7. Railway vehicle according to claim 6, **characterised in that** the internal bellows (38) is made of silicone coated textile.

8. Railway vehicle according to any one of claims 1 to 7, **characterised in that** the air conditioning unit (10) is fastened to the roof (2) by at least one block (12) made of flexible material.

## Patentansprüche

1. Schienenfahrzeug des Typs, umfassend ein Dach (2), in dem eine Öffnung (16) ausgebildet ist, die in einen Fahrgastraum (6) des Fahrzeugs einmündet, eine Klimatisierungseinheit (10), die verschiebbar über dem Dach (2) montiert wurde und einen Luftaustritt (14) umfasst, der gegenüber von der Öffnung (16) des Dachs (2) angeordnet ist, wobei das Fahrzeug eine Verknüpfungsvorrichtung (18) zwischen dem Luftaustritt (14) und der Öffnung (16) umfasst, wobei die Verknüpfungsvorrichtung (18) dazu ausgelegt wurde, den Luftdurchtritt von dem Luftaustritt (14) zu dem Fahrgastraum (6) durch die Öffnung (16) auf dichte Art und Weise zu ermöglichen, wobei die Verknüpfungsvorrichtung (18) einen biegsamen Körper (27) umfasst, der dazu ausgelegt ist, den Durchtritt von Luft sicherzustellen, wenn das Dach (2) und der Luftaustritt (14) der Klimatisierungseinheit (10) gegeneinander verschiebbar sind, **dadurch gekennzeichnet, dass** die Verknüpfungsvorrichtung (18) einen ersten Metallrahmen (20), der an dem Dach (2) auf dichte Art und Weise befestigt ist und der die Öffnung (16) des Dachs (2) umrahmt, und einen zweiten Metallrahmen (22), der an der Klimatisierungseinheit (10) auf dichte Art und Weise befestigt ist und der den Luftaustritt (14) umrahmt, umfasst, wobei der biegsame Körper an den Metallrahmen (20, 22) auf dichte Art und Weise befestigt wurde.

2. Schienenfahrzeug nach Anspruch 2, **dadurch gekennzeichnet, dass** der biegsame Körper (27) eine elastische Manschette (28) umfasst, die den Luftaustritt (14) und die Öffnung (16) umgibt und an der Klimatisierungseinheit (10) und an dem Dach (2) auf dichte Art und Weise befestigt ist.

3. Schienenfahrzeug nach Anspruch 2, **dadurch gekennzeichnet, dass** die elastische Manschette (28) aus mit Silicon beschichtetem Gewebe realisiert ist.

4. Schienenfahrzeug nach einem der Ansprüche 1 bis 3, **dadurch gekennzeichnet, dass** der zweite Metallrahmen (22) ein Gelenkscharnier (24) an der Klimatisierungseinheit umfasst.

5. Schienenfahrzeug nach einem der Ansprüche 1 bis 4, **dadurch gekennzeichnet, dass** es eine Quetschlippe oder ein Dichtungsmaterial umfasst, das sich zwischen dem zweiten Rahmen (22) und der Klimatisierungseinheit (10) erstreckt, derart, dass die Dichtigkeit zwischen dem zweiten Rahmen (22) und der Klimatisierungseinheit (10) sichergestellt ist.

6. Schienenfahrzeug nach einem der Ansprüche 2 bis 5, **dadurch gekennzeichnet, dass** der elastische Körper weiterhin eine innere Manschette (38) umfasst, die sich im Inneren der elastischen Manschette (28) erstreckt und an dem ersten und zweiten Rahmen (20, 22) auf dichte Art und Weise befestigt ist, derart, dass drei Durchgänge (32, 34) von Luft zwischen dem Luftaustritt (14) und der Öffnung (16) des Dachs (2) definiert sind.

7. Schienenfahrzeug nach Anspruch 6, **dadurch gekennzeichnet, dass** die innere Manschette (38) aus mit Silicon beschichtetem Gewebe realisiert ist.

8. Schienenfahrzeug nach einem der Ansprüche 1 bis 7, **dadurch gekennzeichnet, dass** die Klimatisierungsgruppe (10) an Dach (2) über mindestens einen Stift aus elastischem Material befestigt ist.
